Europäisches Patentamt

European Patent Office

Office européen des brevets

(11) Numéro de publication : **0 496 683 A1**

## (12) DEMANDE DE BREVET EUROPEEN

(21) Numéro de dépôt : **92420023.1**

(51) Int. Cl.⁵ : **A01G 3/03**

(22) Date de dépôt : **22.01.92**

(30) Priorité : **22.01.91 FR 9100827**

(43) Date de publication de la demande :
**29.07.92 Bulletin 92/31**

(84) Etats contractants désignés :
**AT CH DE ES FR IT LI PT SE**

(71) Demandeur : **Michelland, Charles**
**La Corbière**
**F-73220 Saint Pierre de Belleville (FR)**
(71) Demandeur : **Michelland neé Ruggeri, Régine**
**La Corbière**
**F-73220 Saint Pierre de Belleville (FR)**
(71) Demandeur : **Michelland, Jacqueline**
**162 quai Pierre Bayard**
**F-73000 Chambery (FR)**

(72) Inventeur : **Michelland, Charles**
**La Corbière**
**F-73220 Saint Pierre de Belleville (FR)**
Inventeur : **Michelland neé Ruggeri, Régine**
**La Corbière**
**F-73220 Saint Pierre de Belleville (FR)**
Inventeur : **Michelland, Jacqueline**
**162 quai Pierre Bayard**
**F-73000 Chambery (FR)**

(74) Mandataire : **de Beaumont, Michel**
**Cabinet Poncet 7, chemin de Tillier B.P. 317**
**F-74008 Annecy RP Cédex (FR)**

(54) **Elagueur.**

(57)    L'élagueur selon l'invention comprend un corps d'outil (1) monté en bout d'un manche (3), le corps d'outil comportant une zone de passage (7) et une partie mobile d'outil (4) articulée sur le corps d'outil (1) selon un axe (11) opposé au manche (3). Par actionnement d'un tirant (14) assujetti en bout d'un levier (12), on provoque la rotation de la partie mobile d'outil (4) qui force l'arête tranchante (5) convexe dans une branche disposée dans la zone de passage (7) à l'encontre de l'arête d'appui (6) formée par le corps d'outil (1). L'élagueur présente l'avantage de couper la branche par sa face supérieure, et permet de couper des branches de plus gros diamètres.

Fig.1

EP 0 496 683 A1

La présente invention concerne les dispositifs permettant de couper les branches d'un arbre, le long du tronc.

Ces dispositifs, qui sont des outils manoeuvrés à la main, sont généralement appelés élagueur ou échenilloir. Les outils connus sont constitués d'une tête d'outil montée en bout d'un manche. La tête d'outil comprend une partie fixe ou corps d'outil assujettie à l'extrémité de raccordement du manche, et une partie mobile d'outil articulée sur le corps d'outil. Une arête tranchante est prévue sur la partie fixe ou la partie mobile d'outil ; une arête d'appui est prévue sur l'autre partie de la tête d'outil en regard de l'arête tranchante. L'arête tranchante et l'arête d'appui comportent des portions actives disposées en regard l'une de l'autre et séparées par une zone de passage de branche dans laquelle est introduite la branche pendant l'opération de coupe. Des moyens permettent d'actionner la partie mobile d'outil par rapport au corps d'outil pour déplacer, pendant l'opération de coupe, l'arête tranchante et l'arête d'appui l'une vers l'autre dans la zone de passage de branche, pour couper la branche.

Par exemple, le document F R-A-715 557 décrit un élagueur dont le corps d'outil comprend deux becs (e) et (f). Le bec inférieur (e) sert de crochet pour immobiliser la branche à couper. Le bec supérieur (f) sert de support à une lame tranchante (h) articulée au voisinage de l'extrémité du bec supérieur (f). L'axe de rotation (i) de la lame tranchante (h) est disposé, sur la partie mobile d'outil, nettement à l'écart de la partie coupante d'arête tranchante (h). En outre, l'axe de rotation (i) est disposé sur le corps d'outil en une position nettement à l'écart de la zone dans laquelle se trouve la branche à couper (g). Il en résulte que, lors de la rotation de la lame coupante (h), celle-ci pénètre dans la branche selon une pénétration radiale, sans mouvement de glissement tangentiel.

Le document DE-C-561 668 décrit un élagueur dans lequel un corps d'outil (a) présente deux becs, à savoir un bec supérieur (b) fortement recourbé, et un bec inférieur non référencé servant de crochet pour immobiliser la branche à couper. Une lame de coupe (d) pivote autour d'un axe (c) disposé dans le bec supérieur de corps d'outil à l'écart de l'extrémité (e) de l'arc supérieur (b), la lame de coupe (d) étant entraînée par un levier (f) par l'intermédiaire de dents (p, o). Dans ce dispositif, l'axe de rotation (c) est nettement à l'écart de la partie tranchante de lame de coupe (d). De plus, l'axe de rotation (c) est nettement à l'écart de la zone de pénétration de lame de coupe (d) dans la branche à couper. Il en résulte que, également dans ce document, la lame de coupe (d) pénètre dans la branche à couper selon une direction de pénétration radiale, sans glissement tangentiel sensible.

La tête d'outil étant destinée à être portée en bout de manche, pour atteindre les branches en élévation le long du tronc de l'arbre, il est nécessaire que la tête d'outil ne soit pas trop lourde. Le dimensionnement des parties coupantes de l'outil est donc limité par les impératifs de légèreté.

On constate que les outils connus fonctionnent généralement bien pour couper des branches de petit diamètre, par exemple d'un diamètre allant jusqu'à 3 ou 4 centimètres environ. Cependant, les outils connus requièrent une force relativement importante lorsqu'il s'agit de couper des branches d'un diamètre supérieur à 4 centimètres, et la coupe des branches de plus de 5 centimètres de diamètre parait pratiquement impossible sans augmenter inconsidérément le dimensionnement et le poids de la tête d'outil.

Le problème proposé par la présente invention est d'augmenter sensiblement le pouvoir de coupe de la tête d'outil sans pour autant augmenter son poids.

Pour cela, l'invention résulte de l'observation selon laquelle les outils élagueurs connus travaillent d'une façon par laquelle la lame et la contre lame serrent la branche selon deux zones diamétralement opposées, et la lame pénètre dans la branche par un mouvement de pénétration radiale selon une translation dont la direction passe sensiblement par le centre de la branche. Il semble que cette disposition limite la grosseur des branches qu'il est possible de couper avec ces outils connus.

Pour cela, l'invention se propose de modifier la structure de la tête d'outil, afin que la lame ait, par rapport à la branche, un double mouvement de pénétration radiale et de glissement tangentiel. La pénétration de la lame est ainsi très sensiblement facilitée.

D'autre part, dans les dispositifs connus précédemment cités, le bec inférieur constitue une gêne pour le positionnement de la tête d'outil sur une branche lorsque celle-ci est à distance importante de l'utilisateur.

Un autre aspect de l'invention est de faciliter le positionnement de la tête d'outil sur une branche, en évitant d'avoir recours à un bec inférieur pour le maintien de la branche pendant la coupe. L'invention se propose ainsi de concevoir une nouvelle structure de tête d'outil permettant d'assurer un maintien très efficace de la branche pendant la coupe, sana présence d'aucune aspérité sur la face d'appui du manche ou face tournée vers la branche à couper.

Pour cela, un élagueur selon la présente invention comprend :

– un corps d'outil conformé pour être assujetti à l'extrémité de raccordement d'un manche se développant selon une direction de développement,

– une partie mobile d'outil articulée sur le corps d'outil selon un axe de rotation,

– une arête tranchante, incurvée en arc convexe, prévue sur la partie mobile d'outil,

– une arête d'appui, incurvée en arc concave, prévue sur le corps d'outil en regard de l'arête tranchante,

– l'arête tranchante et l'arête d'appui comportant des portions actives disposées en regard l'une de l'autre pour définir une zone de passage de branche dans laquelle est introduite la branche pendant l'opération de coupe,

– des aryens permettant d'actionner la partie mobile d'outil par rapport au corps d'outil pour déplacer pendant l'opération de coupe l'arête tranchante vers l'arête d'appui selon une direction de pénétration et couper ainsi la branche dans la zone de passage de branche ;

selon l'invention :

– l'axe de rotation est disposé sur le corps d'outil en une position proche de la direction de pénétration I-I,

– l'axe de rotation est disposé sur la partie mobile d'outil au voisinage d'une première extrémité de l'arête tranchante et à l'écart du centre de l'arc convexe d'arête tranchante,

de sorte que l'arête tranchante pénètre dans la branche par un double mouvement de pénétration radiale et de glissement tangentiel.

L'arête tranchante présente avantageusement un profil sensiblement circulaire, qui, de préférence, a une longueur supérieure ou égale à un quart de cercle. Par exemple, la partie mobile d'outil peut être un disque plat sensiblement circulaire.

Selon un mode de réalisation, le corps d'outil selon l'invention comporte avantageusement une portion recourbée en crochet, se développant en arc depuis une zone de raccordement au manche jusqu'à une zone d'extrémité libre, en passant par une zone intermédiaire opposée au manche, l'arête d'appui étant constituée par l'arête intérieure de la zone d'extrémité libre du crochet ; la partie mobile d'outil est articulée sur le corps d'outil selon un axe de rotation perpendiculaire au plan du crochet ; ledit axe de rotation est situé dans la zone intermédiaire de crochet opposée au manche ; lors de sa rotation, pendant l'opération de coupe, la partie mobile d'outil pivote dans le sens assurant le déplacement de l'arête tranchante depuis la zone intermédiaire de crochet en direction de la zone d'arête d'appui proche de ladite extrémité libre et vers le fond de la portion recourbée en crochet.

La partie mobile d'outil est actionnée par des moyens d'actionnement. Selon un premier mode de réalisation, les moyens d'actionnement comprennent un levier solidaire de la partie mobile d'outil et à l'extrémité duquel est assujetti un tirant actionnable par l'utilisateur depuis l'extrémité libre du manche. Ce mode de réalisation constitue la forme d'exécution la plus simple des moyens d'actionnement, permettant de réaliser une tête d'outil particulièrement légère. Cependant, lors de l'utilisation, le levier doit pivoter autour de l'axe d'articulation de la partie mobile d'outil, ce qui requiert une zone de débattement libre autour de la tête d'outil pour le passage du levier. Cette structure est alors mal adaptée pour la taille des branches lorsque les branches successives de l'arbre sont rapprochées les unes des autres, le pivotement du levier pouvant être gêné par les branches voisines.

Pour éviter cette difficulté, l'invention prévoit un second mode de réalisation dans lequel les moyens d'actionnement comprennent un levier articulé sur le corps d'outil selon un axe proche de la zone de raccordement au manche, le levier étant raccordé à la partie mobile d'outil par une biellette. Le levier est alors disposé en position inférieure de la tête d'outil, et son débattement n'est plus gêné par les branches voisines de la branche à couper.

Dans tous les cas, un ressort de rappel sollicite la partie mobile d'outil pour écarter la partie active de l'arête tranchante de la partie active de l'arête d'appui.

Des moyens de moufle peuvent être prévus pour augmenter la force de traction du tirant.

D'autres objets, caractéristiques et avantages de la présente invention ressortiront de la description suivante de modes de réalisation particuliers, faite en relation avec les figures jointes, parmi lesquelles :

– la figure 1 est une vue de côté d'un élagueur selon l'invention en position ouverte, comportant un dispositif d'actionnement de lame selon un premier mode de réalisation simplifié ;

– la figure 2 est une vue de côté d'un élagueur selon l'invention en position ouverte et comportant un dispositif d'actionnement de lame selon un second mode de réalisation ;

– la figure 3 est une vue de côté de l'élagueur de la figure 2, en position fermée ;

– la figure 4 est une vue de côté d'un corps d'outil d'élagueur selon l'invention ; et

– la figure 5 est une vue de côté de la partie mobile d'élagueur de la figure 1.

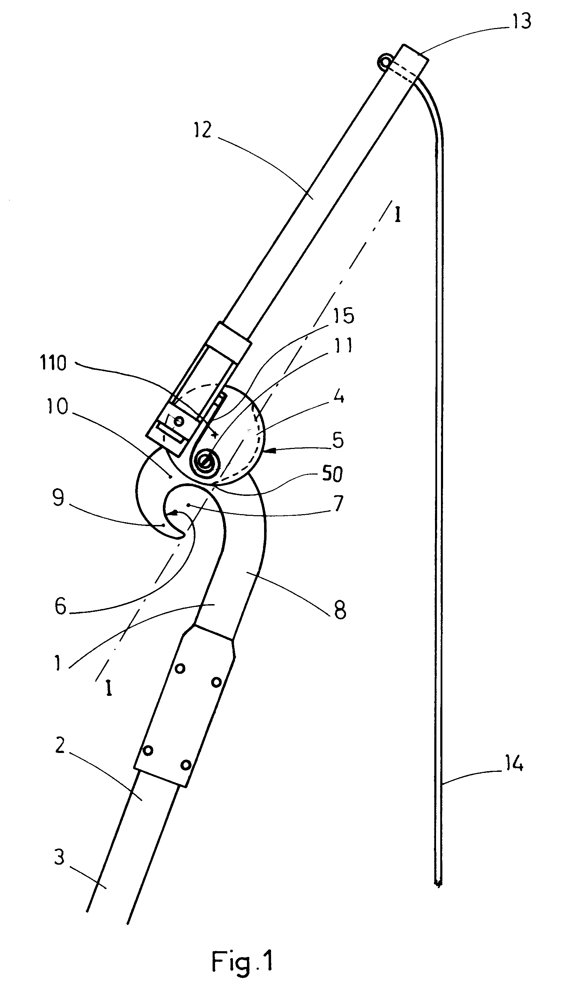

Dans le mode de réalisation représenté sur la figure 1, l'élagueur selon l'invention comprend un corps d'outil 1 conformé pour être assujetti à l'extrémité de raccordement 2 d'un manche 3. Une partie mobile 4 d'outil est montée sur le corps d'outil 1, l'ensemble de la partie mobile d'outil 4 et du corps d'outil 1 formant une tête d'outil destinée à couper des branches d'arbre le long du tronc. La partie mobile d'outil 4 comprend une arête tranchante 5. Le corps d'outil 1 comprend une arête d'appui 6. L'arête tranchante 5 et l'arête d'appui 6 comportent des portions actives disposées en regard l'une de l'autre pour définir une zone de passage 7 pour l'introduction de la branche à couper.

Dans le mode de réalisation représenté, le corps d'outil 1 comporte une portion recourbée en crochet, comme le représente la figure. Ainsi, le corps d'outil 1 est généralement plat, le crochet se développant dans un plan. La portion recourbée en crochet se développe en arc depuis une zone 8 de raccordement au manche jusqu'à une zone d'extrémité libre 9, en passant par une zone intermédiaire 10. La zone intermédiaire 10 est opposée au manche 3, c'est-à-dire qu'elle constitue la partie de corps d'outil 1 la plus éloignée du manche 3. L'arête d'appui 6 est formée par l'arête intérieure de la zone d'extrémité libre 9 du crochet.

La partie mobile d'outil 4, pourvue de l'arête tranchante 5, est articulée sur le corps d'outil 1 selon un axe de rotation 11 perpendiculaire au plan du crochet. L'axe de rotation 11 est situé dans la zone intermédiaire 10 de crochet opposée au manche. Ainsi, pendant l'opération de coupe, la rotation de la partie mobile d'outil 4 autour de son axe 11 déplace l'arête tranchante 5 depuis la zone intermédiaire de crochet 10 en direction de la zone d'arête d'appui 6 qui est proche de l'extrémité libre 9 du crochet.

Selon l'invention, les formes du corps d'outil et de la partie mobile d'outil sont choisies de manière que l'arête tranchante 5 pénètre dans la branche par un double mouvement de pénétration radiale et de glissement tangentiel.

Pour cela, si l'on considère la figure 1, on admet que l'arête tranchante 5 pénètre, dans une branche placée dans la zone de passage 7, selon une direction de pénétration I-I. L'axe de rotation 11 de la partie mobile d'outil 4 est disposé sur le corps d'outil 1 en une position proche de cette direction de pénétration I-I. Sur la partie mobile d'outil 4, l'axe de rotation 11 est disposé au voisinage d'une première extrémité 50 de l'arête tranchante 5. D'autre part, l'axe de rotation 11 est disposé à l'écart du centre 110 de l'arc convexe d'arête tranchante 5. L'arc formé par l'arête tranchante 5 est ainsi excentré par rapport à l'axe de rotation 11, de sorte que la rotation de la partie mobile d'outil 4 autour de l'axe 11 produit la pénétration progressive de l'arête tranchante 5 dans la zone de passage 7, cette pénétration s'accompagnant d'un glissement tangentiel de l'arête tranchante 5.

L'arête tranchante 5 est incurvée en arc convexe, et présente de préférence un profil sensiblement circulaire, de longueur supérieure ou égale à un quart de cercle. Par exemple, la partie mobile 4 d'outil est un disque plat sensiblement circulaire, en acier tranchant, dont une face coulisse contre une face latérale du corps d'outil 1. Pour former l'arête tranchante 5, le disque formant la partie mobile d'outil 4 est affûté sur le côté opposé à la face d'appui contre le corps d'outil 1. Le corps d'outil 1, notamment l'arête d'appui 6, peut également être en acier tranchant, non affûté.

La zone de passage 7 doit être d'un diamètre suffisant pour l'introduction de la branche à couper. Notamment, l'extrémité libre 9 du crochet doit être suffisamment écartée de la zone de raccordement 8, pour permettre le passage de la branche. Le disque formant la partie mobile d'outil 4 doit avoir un diamètre supérieur au diamètre formé par la zone de passage 7. Ainsi, l'arête d'appui 6 forme une contre lame coopérant avec l'arête tranchante 5 pour couper la branche.

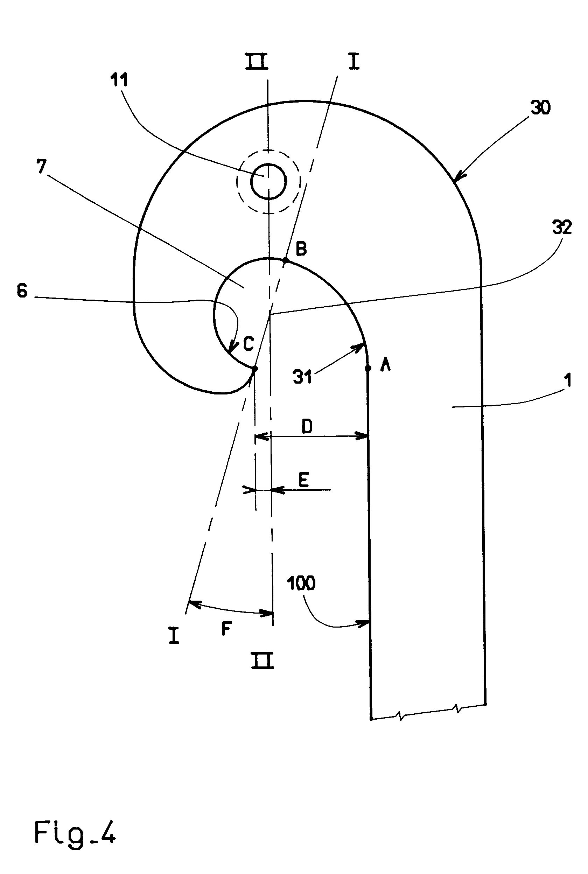

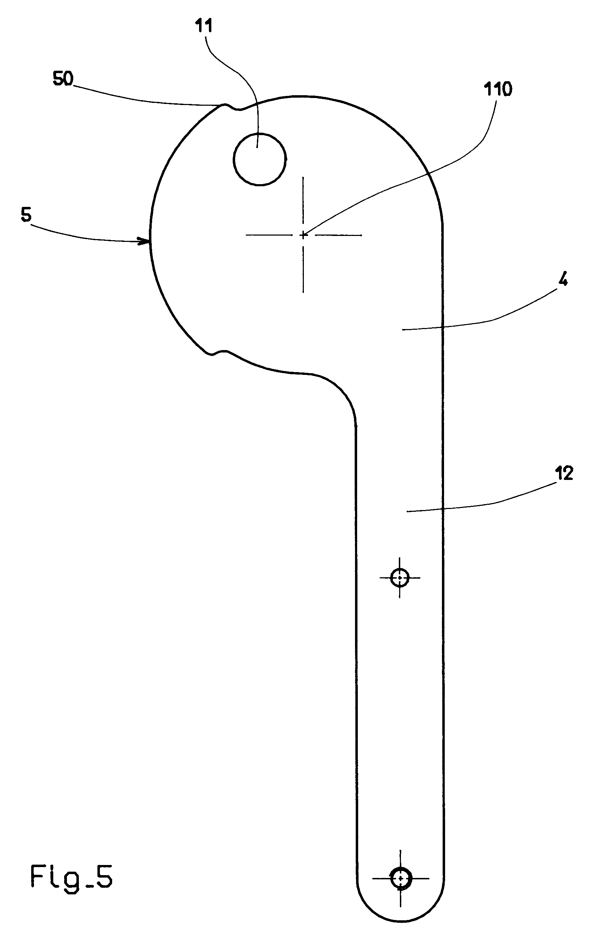

Les figures 4 et 5 représentent, à plus grande échelle et plus en détail, les formes respectives préférées du corps d'outil 1 et de la partie mobile d'outil 4.

Sur la figure 4, le corps d'outil 1, en forme générale de crochet, présente un bord extérieur 30 et un bord intérieur 31. Le bord intérieur 31 de portion recourbée en crochet de corps d'outil 1 comprend une première zone en arc de cercle AB et une seconde zone en demi-cercle BC. La première zone en arc de cercle AB est centrée à l'extrémité libre C du crochet, et présente un rayon de valeur D choisie pour correspondre au diamètre des branches les plus grosses que l'on désire couper avec l'élagueur. Cette première zone en arc de cercle AB se raccorde tangentiellement au point A au bord d'appui 100 du manche, et elle se développe selon un arc compris entre 60 et 90 degrés.

La seconde zone en demi-cercle BC a un diamètre dont la valeur est égale au rayon D de la première zone AB. Cette seconde zone se raccorde tangentiellement à l'extrémité B de la première zone AB, et elle se développe jusqu'à l'extrémité libre C du crochet.

De préférence, l'axe de rotation 11 est situé sur le corps d'outil sur une droite II-II qui est parallèle à la direction de développement du manche et qui passe par le centre 32 du demi-cercle BC formant la seconde zone en demi-cercle.

Selon l'invention, la coupe de la branche est facilitée si l'on coupe la branche depuis le dessus. Il y a donc intérêt à diminuer le plua possible l'inclinaison F du serpent BC par rapport à la direction II-II ou direction de développement du manche. Par contre, en diminuant cette inclinaison F du segment BC, il devient nécessaire d'augmenter la profondeur du creux formé par l'arc BC, et donc d'augmenter la taille de la tête d'outil. Ainsi, pour réduire la taille de la tête de l'outil, il faut augmenter l'angle F formé par le serpent BC avec la direction II-II. Par ailleurs, si l'angle F formé entre le segment BC et la direction II-II est trop important, c'est-à-dire supérieur à 15 degrés environ, on constate que la coupe de la branche devient imparfaite, et il apparait des bavures en fin de coupe.

En tenant compte de ces considérations, on choisit une inclinaison F du segment BC par rapport à la direction II-II selon une valeur voisine de 15 degrés, qui constitue un bon compromis, pour obtenir à la fois une coupe correcte de la branche et une taille réduite de la tête d'outil. Dans ce cas, la première zone AB en arc de cercle se développe selon un arc de 75 degrés environ.

Dans cette disposition, l'extrémité C du crochet est distante de la direction II-II d'une distance E égale à environ 0,125 D.

La partie mobile d'outil 4 est conçue de façon que l'arête tranchante 5 débute sa pénétration dans la zone de passage 7 sensiblement au point B. La rotation de la partie mobile d'outil, lors de la coupe, s'effectue dans le sens des aiguilles d'une montre sur la figure 1, et cette rotation tend à repousser la branche dans le fond de la partie en crochet, c'est-à-dire contre la partie en demi-cercle BC.

Les figures 4 et 5 représentent, à l'échelle 0,7, les formes des parties fixe et mobile d'outil dans un mode de réalisation de l'invention permettant la coupe de branche dont le diamètre est inférieur ou égal à 50 millimètres.

La partie mobile d'outil 4, en forme de disque, est solidaire d'un levier 12 à l'extrémité 13 duquel est assujetti un tirant 14 actionnable par l'utilisateur depuis l'extrémité libre du manche 3. Par traction sur le tirant 14 en direction de l'extrémité libre du manche 3, le levier 12 pivote dans le sens provoquant le rapprochement de l'arête tranchante 5 et de l'arête d'appui 6. Le tirant peut avantageusement être une cordelette.

Un ressort de rappel 15 sollicite la partie mobile d'outil 4 pour repousser l'arête tranchante 5 à l'écart de l'arête d'appui 6.

Le fonctionnement de ce dispositif est le suivant : en tenant l'outil par l'extrémité libre du manche 3, l'utilisateur engage le corps d'outil 1 par dessus une branche à couper, de façon que la branche traverse la zone de passage 7. La partie de branche à couper se trouve alors emprisonnée entre l'extrémité libre 9 du corps d'outil 1 et la partie mobile 4 de l'outil. Dans cette position, l'outil est suspendu à la branche par la partie en crochet du corps d'outil 1. Par traction sur le tirant 14, l'utilisateur rapproche progressivement l'arête tranchante 5 de l'arête d'appui 6, de sorte que l'arête tranchante 5 pénètre progressivement dans la face supérieure de la branche à couper, ou face de branche opposée au sens de développement du manche 3 depuis la tête d'outil jusqu'à son extrémité libre. Le pivotement de partie mobile d'outil 4, par l'action du tirant 14, s'effectue à l'encontre de la force de rappel exercée par le ressort 15. En relâchant le tirant 14, le ressort 15 ramène le levier 12 en position ouverte représentée sur la figure 1, écartant l'arête tranchante 5 de l'arête d'appui 6. L'outil est alors prêt pour s'engager sur une autre branche à couper. En fin de pivotement du levier 12, à l'issue de l'opération de coupe, l'arête tranchante 5 a balayé la totalité de la zone de passage 7, pour couper la totalité de la branche.

De bons résultats peuvent être obtenus en utilisant un corps d'outil 1 dans lequel la partie en crochet définit une zone de passage 7 à profil généralement circulaire légèrement fermé, c'est-à-dire dont l'ouverture est de 120 degrés environ. L'axe 11 peut être situé à l'opposé de l'ouverture. La partie de corps d'outil 1 entourant la zone de passage 7 doit avoir une largeur suffisante pour constituer une face de guidage de la partie mobile 4 d'outil lors de son pivotement, évitant que, en fin de rotation de la partie mobile d'outil pendant la coupe, l'arête tranchante 5 vienne buter contre l'extrémité libre 9 du corps d'outil 1.

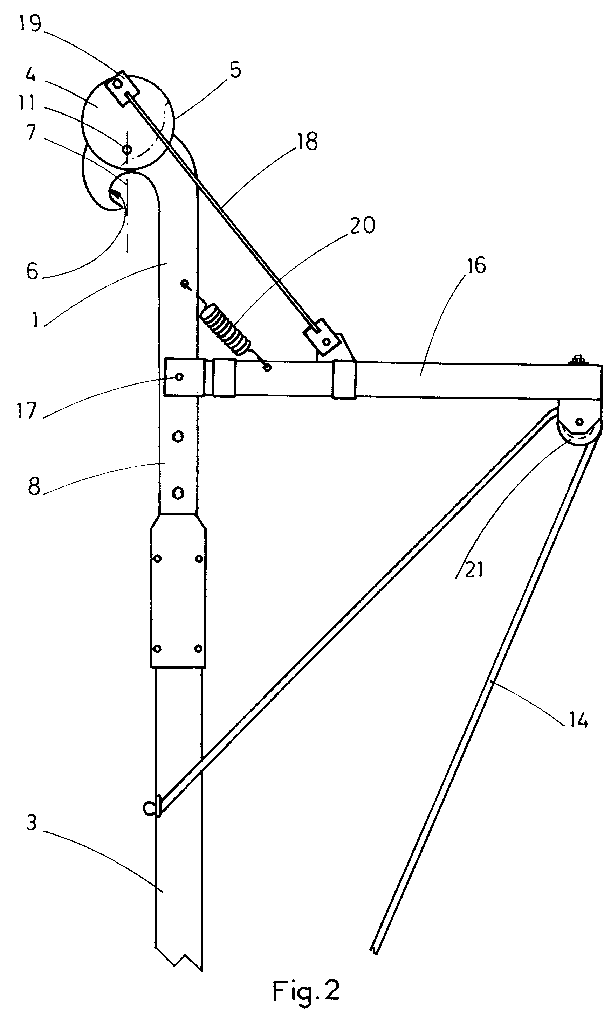

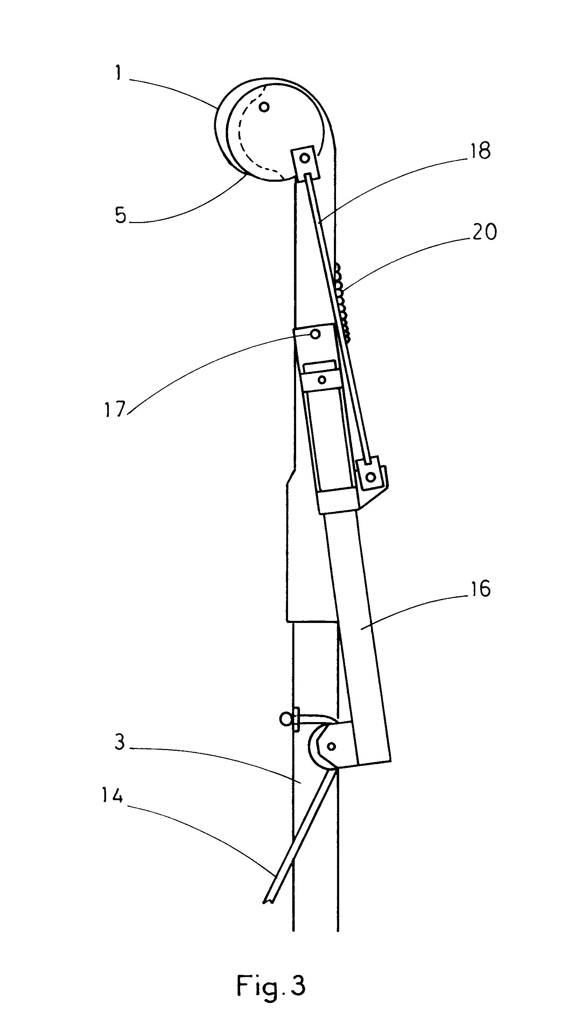

Dans le mode de réalisation représenté sur la figure 2, le corps d'outil 1 et la partie mobile d'outil 4 comportent des structures similaires à celles du mode de réalisation de la figure 1, avec une partie de corps d'outil 1 en crochet définissant une zone de passage 7 et une arête d'appui 6 en arc. Dans ce mode de réalisation, le levier 16 est articulé sur le corps d'outil 1 selon un axe 17 proche de la zone de raccordement 8 au manche 3. Une biellette 18 relie une portion intermédiaire du levier 16 et une portion périphérique 19 de la partie mobile d'outil 4. La portion périphérique 19 est opposée à la partie d'attaque de l'arête tranchante 5 par rapport à l'axe de rotation 11 de la partie mobile d'outil 4. Un ressort de rappel 20 sollicite le levier 16 pour le ramener dans la position d'ouverture, représentée sur la figure 2, dans laquelle l'arête tranchante 5 est à l'écart de l'arête d'appui 6. Le tirant 14, actionnable par l'utilisateur depuis l'extrémité libre du manche 3, permet de tirer l'extrémité libre du levier 16 et de provoquer sa rotation dans le sens rapprochant l'arête de coupe 5 de l'arête d'appui 6. Par traction sur le tirant 14, le levier 16 pivote vers le bas, tirant la biellette 18 qui provoque la rotation de la partie mobile d'outil 4 dans le sens des aiguilles d'une montre, produisant le rapprochement de l'arête tranchante 5 vers l'arête d'appui 6. En fin de pivotement, l'outil prend la position représentée sur la figure 3, dans laquelle le levier 16 est proche du manche 3, et dans laquelle l'arête tranchante 5 a entièrement balayé la zone de passage 7. Pour augmenter la force de coupe, le tirant 14 passe dans une poulie 21 pivotant autour d'un axe monté à l'extrémité libre du levier 16, une extrémité du tirant 14 étant fixée sur le manche 3 comme le représente la figure 2. On réalise ainsi un moyen de moufle.

Sur les figures 1 à 3, la partie mobile 4 portant l'arête tranchante 5 est représentée en avant du corps d'outil 1. Cette disposition est favorable pour couper des branches d'arbre sur un sol en pente sur la face droite du tronc d'arbre dans le sens descendant de la pente. Pour couper les branches sur la face gauche du tronc d'arbre, on peut avantageusement positionner la partie mobile 4 en arrière du corps d'outil 1.

Dans l'un et l'autre des modes de réalisation qui viennent d'être décrits, l'arête tranchante 5 en forme d'arc convexe pénètre dans la branche par un mouvement tranchant combinant à la fois un déplacement axial vers l'intérieur de la branche et un glissement perpendiculaire à sa pénétration. On augmente ainsi considérablement le pouvoir tranchant du dispositif, permettant la coupe de branches plus grosses et avec beaucoup moins d'efforts.

La partie mobile d'outil 4, en forme de disque, doit faire près d'un démi-tour pour couper entièrement la branche sans laisser de bavure. Par conséquent, lors de la rotation de la partie mobile d'outil 4, la biellette 18 prend des positions pouvant se rapprocher de l'axe de rotation 11. Pour conserver une force de coupe suffisante, on prévoit donc avantageusement le moyen de moufle décrit sur la figure 2, dans lequel le tirant 14 passe dans la poulie 21.

On comprend que l'outil selon l'invention, dans tous ces modes de réalisation, est conformé de telle manière que l'outil peut reposer sur la branche avant la coupe, et que le tranchant 5 coupe systématiquement la face supérieure de la branche ou face la plus éloignée du manche d'outil. Les essais ont montré que cette disposition augmente très sensiblement les possibilités de coupe de l'outil, sans nécessiter d'augmentation sensible du poids de la tête d'outil. On arrive en particulier à couper des branches de diamètre supérieur à 5 centimètres environ, sans nécessiter une force considérable de traction sur le tirant.

La présente invention n'est pas limitée aux modes de réalisation qui ont été explicitement décrits, mais elle en inclut les diverses variantes et généralisations contenues dans le domaine des revendications ci-après.

## Revendications

1 - Elagueur pour couper une branche d'arbre, comprenant :
- un corps d'outil (1) conformé pour être assujetti à l'extrémité de raccordement (2) d'un manche (3) se développant selon une direction de développement,
- une partie mobile (4) d'outil articulée sur le corps d'outil (1) selon un axe de rotation (11),
- une arête tranchante (5), incurvée en arc convexe, prévue sur la partie mobile d'outil (4),
- une arête d'appui (6), incurvée en arc concave, prévue sur le corps d'outil (1) en regard de l'arête tranchante (5),
- l'arête tranchante (5) et l'arête d'appui (6) comportant des portions actives disposées en regard l'une de l'autre pour définir une zone de passage (7) de branche dans laquelle est introduite la branche pendant l'opération de coupe,
- des moyens (12, 14, 16, 22, 24) permettant d'actionner la partie mobile d'outil (4) par rapport au corps d'outil (1) pour déplacer pendant l'opération de coupe l'arête tranchante (5) vers l'arête d'appui (6) selon une direction de pénétration (I-I) et couper ainsi la branche dans la zone de passage de branche (7),
caractérisé en ce que :
- l'axe de rotation (11) est disposé sur le corps d'outil (1) en une position proche de la direction de pénétration (I-I),
- l'axe de rotation (11) est disposé sur la partie mobile d'outil (4) au voisinage d'une première extrémité (50) de l'arête tranchante (5) et à l'écart du centre (110) de l'arc convexe d'arête tranchante (5), de sorte que l'arête tranchante (5) pénètre dans la branche par un double mouvement de pénétration radiale et de glissement tangentiel.

2 - Elagueur selon la revendication 1, caractérisé en ce que l'arête tranchante (5) présente un profil sensiblement circulaire.

3 - Elagueur selon la revendication 2, caractérisé en ce que l'arête tranchante (5) a une longueur supérieure ou égale à un quart de cercle.

4 - Elagueur selon l'une quelconque des revendications 1 à 3, caractérisé en ce que la partie mobile d'outil (4) est un disque plat sensiblement circulaire.

5 - Elagueur selon l'une quelconque des revendications 1 à 4, caractérisé en ce que :
- le corps d'outil (1) comporte une portion recourbée en crochet, se développant en arc depuis une zone (8) de raccordement au manche (3) jusqu'à une zone d'extrémité libre (9) en passant par une zone intermédiaire (10) opposée au manche (3), l'arête d'appui (6) étant constituée par l'arête intérieure de la zone d'extrémité libre (9) du crochet,
- l'axe de rotation (11) est situé dans la zone intermédiaire (10) de crochet opposée au manche,
- lors de sa rotation pendant l'opération de coupe, la partie mobile d'outil (4) pivote dans le sens assurant le déplacement de la partie active d'arête tranchante (5) depuis la zone intermédiaire de crochet (10) en direction de la zone d'arête d'appui (6) proche de ladite extrémité libre et vers le fond de la portion recourbée en crochet.

6 - Elagueur selon la revendication 5, caractérisé en ce que le bord intérieur (31) de portion recourbée en crochet de corps d'outil (1) comprend :
- première zone en arc de cercle (AB) de rayon D centré à l'extrémité libre (C) du crochet, se raccordant tangentiellement au bord d'appui du manche, et se développant selon un arc compris entre 60 degrés et 90 degrés,
- une seconde zone en demi-cercle (BC) de diamètre D, se raccordant tangentiellement à l'extrémité (B) de la première zone en arc de cercle (AB) et se développant jusqu'à l'extrémité libre (C) du crochet.

7 - Elagueur selon la revendication 6, caractérisé en ce que la première zone en arc de cercle (AB) se développe selon un arc de 75 degrés environ.

8 - Elagueur selon la revendication 7, caractérisé en ce que l'axe de rotation (11) est situé sur le corps d'outil sur une parallèle (II-II) à la direction de développement du manche et passant par le centre (32) du demi-cercle formant la seconde zone en demi-cercle (BC).

9 - Elagueur selon l'une quelconque des revendications 1 à 8, caractérisé en ce que :

    – la partie mobile d'outil (4) est solidaire d'un levier (12) à l'extrémité duquel est assujetti un tirant (14) actionnable par l'utilisateur depuis l'extrémité libre du manche (3),

    – par traction sur le tirant (14), le levier (12) pivote dans le sens provoquant le rapprochement de l'arête tranchante (5) et de l'arête d'appui (6),

    – un ressort de rappel (15) sollicite la partie mobile d'outil (4) pour repousser l'arête tranchante (5) à l'écart de l'arête d'appui (6).

**10 -** Elagueur selon l'une quelconque des revendications 1 à 8, caractérisé en ce que :

    – la partie mobile d'outil (4) est reliée par une biellette (18) à un levier (16) articulé sur le corps d'outil (1) selon un axe (17) proche de la zone de raccordement (8) au manche (3),

    – un tirant (14) permet d'agir sur l'extrémité libre du levier (16) pour actionner l'ensemble formé par le levier (16), la biellette (18) et la partie mobile d'outil (4),

    – par traction sur le tirant (14), le levier (16) pivote dans le sens provoquant la rotation de la partie mobile d'outil (4) pour rapprocher l'arête tranchante (5) et l'arête d'appui (6),

    – un ressort de rappel (20) sollicite le levier (16) dans le sens provoquant le rappel de la partie mobile d'outil (4) en position dans laquelle l'arête tranchante (5) est à l'écart de l'arête d'appui (6).

Fig.1

Fig. 2

Fig. 3

Flg.4

Fig.5

**Office européen des brevets**

# RAPPORT DE RECHERCHE EUROPEENNE

Numero de la demande

EP 92 42 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-141 902 (GOOLD)<br>* page 2, ligne 10 - page 3, ligne 4; figures 1-2 * | 1,5 | A01G3/03 |
| A | | 6-8 | |
| | --- | | |
| X,D | FR-A-715 557 (DURET)<br>* page 1, ligne 44 - ligne 49 *<br>* page 2, ligne 20 - ligne 80; figures 1-3 * | 1-3 | |
| Y | | 4-5,9-10 | |
| | --- | | |
| Y | DE-C-650 962 (W. KÜCKE & CO.)<br>* le document en entier * | 5,9-10 | |
| | --- | | |
| Y | US-A-2 549 280 (ALLEN)<br>* le document en entier * | 4 | |
| | --- | | |
| A,D | DE-C-561 668 (FRIELINGHAUS & RIES)<br>* le document en entier * | 10 | |
| | ----- | | |

**DOMAINES TECHNIQUES RECHERCHES (Int. Cl.5)**

A01G

Le présent rapport a été établi pour toutes les revendications

| Lieu de la recherche | Date d'achèvement de la recherche | Examinateur |
|---|---|---|
| LA HAYE | 06 MAI 1992 | FONTS CAVESTANY A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)